Europäisches Patentamt

European Patent Office

Office européen des brevets

(11) Veröffentlichungsnummer: **0 583 328 B1**

(12) **EUROPÄISCHE PATENTSCHRIFT**

(45) Veröffentlichungstag der Patentschrift: **06.12.95**

(51) Int. Cl.⁶: **B60L 11/18**, H02M 3/335

(21) Anmeldenummer: **92909918.2**

(22) Anmeldetag: **08.05.92**

(86) Internationale Anmeldenummer:
**PCT/AT92/00067**

(87) Internationale Veröffentlichungsnummer:
**WO 92/20546 (26.11.92 92/29)**

(54) **ELEKTRONISCHE STEUERSCHALTUNG FÜR DIE SPEISUNG VON OHMISCH-INDUKTIVEN LASTEN DURCH GLEICHSTROMIMPULSE.**

(30) Priorität: **10.05.91 AT 973/91**

(43) Veröffentlichungstag der Anmeldung:
**23.02.94 Patentblatt 94/08**

(45) Bekanntmachung des Hinweises auf die Patenterteilung:
**06.12.95 Patentblatt 95/49**

(84) Benannte Vertragsstaaten:
**AT CH DE FR GB LI NL**

(56) Entgegenhaltungen:
**DE-A- 3 940 955**
**FR-A- 2 613 887**

**CONF. RECORD INDUSTRY APPLICATIONS SOCIETY 11. Oktober 1985, TORONTO, CANADA Seiten 1052 - 1054; G.K. DUBEY ET AL: 'STEP-UP CHOPPER DRIVE WTH REGENERATION FOR BATTERY OPERATED VEHICLE CONTROL'**

(73) Patentinhaber: **SILENT MOTORS, ELEKTRO-FAHRZEUGE UND -ANTRIEBE, ENTWICKLUNG UND BERATUNG GESELLSCHAFT M.B.H.**
**Lindengasse 38/9**
**A-1070 Wien (AT)**

(72) Erfinder: **WAWRA, Manfred**
**Geblergasse 64/6**
**A-1170 Wien (AT)**
Erfinder: **BESZEDICS, Geza**
**Mautner-Markhof-Strasse 21/13**
**A-2500 Baden (AT)**
Erfinder: **WINKLER, Werner**
**Grüngasse 34/6**
**A-1050 Wien (AT)**
Erfinder: **PAVUZA, Franz**
**Anthäusgasse 2**
**A-1140 Wien (AT)**
Erfinder: **TORISER, Walter**
**Hernstoferstrasse 1/3/37**
**A-1140 Wien (AT)**

PATENT ABSTRACTS OF JAPAN vol. 7, no. 132 (E-180)(1277) 9. Juni 1983& JP-A-58 046 874

(74) Vertreter: **Haffner, Thomas M., Dr.**
**Patentanwalt**
**Schottengasse 3a**
**A-1014 Wien (AT)**

## Beschreibung

Die Erfindung betrifft eine elektronische Steuerschaltung für die Speisung von ohmisch-induktiven Lasten durch Gleichstromimpulse mit veränderbarem Tastverhältnis, insbesondere Elektromotoren, vorzugsweise solche, in deren Stator oder Rotor ein magnetisches Gleichfeld erzeugt wird, mit einem einen Transformator aufweisenden Steiler, wobei der Transformator primärseitig über von Freilaufdioden überbrückte elektronische Schalter in Gegentaktanordnung an eine Gleichspannungsquelle angeschlossen ist und sekundärseitig über symmetrisch mit dem Transformator verbundene, von Freilaufdioden überbrückte elektronische Schalter mit der Last in Verbindung steht, wobei die Sekundärseite des Transformators mit der Gleichspannungsquelle galvanisch verbunden oder verbindbar ist und wobei der Transformator vorzugsweise als Autotransformator mit einer einzigen durchgehenden Wicklung mit Mittelanzapfung und zu dieser symmetrischen Anzapfungen ausgebildet ist.

Sogenannte Tiefsetzsteller, die mit bipolaren Transistoren, MOS-Feldeffekt-Transistoren oder Thyristoren realisiert werden können, ermöglichen einen ökonomischen Teillastbetrieb von Verbrauchern bei Speisung von einer Gleichspannungsquelle mit konstanter Spannung, weil hiebei Verluste, wie sie beim Vorschalten von einstellbaren Widerständen entstehen, vermieden werden. Dies ist u.a. beim Betrieb von Elektrofahrzeugen aus mitgeführten Akkumulatoren von Bedeutung, weil durch einen verlustarmen Teillastbetrieb solcher Fahrzeuge deren je Akkumulatorladung erzielbare Reichweite wesentlich verbessert werden kann.

Im einfachsten Fall liegt in Reihe mit der Gleichspannungsquelle und dem Elektromotor ein elektronischer Schalter, wobei eine zusätzliche Freilaufdiode parallel zum Motor geschaltet ist. Die über den Schalter dem Motor zugeführte elektrische Energie läßt sich durch das Tastverhältnis zwischen Schließ- und Öffnungszustand des Schalters steuern. Dies ist die einfachste Betriebsart, die einem Ein-Quadranten-Betrieb entspricht.

Wenn sich der Motor unabhängig von seiner Drehzahl als Generator betreiben läßt, ist ein Zwei-Quadranten-Betrieb möglich, wobei der Motor nicht nur elektrisch angetrieben, sondern auch elektrisch gebremst werden kann. Die Steuerschaltung für die Speisung des Motors umfaßt dann eine an die Gleichspannungsquelle angeschlossene Reihenschaltung zweier elektronischer Schalter, wobei der Elektromotor zu einem dieser beiden Schalter parallelgeschaltet ist. Von den beiden elektronischen Schaltern darf jeweils nur einer leitend gesteuert werden, während der andere gesperrt sein muß. Der mit der Gleichspannungsquelle und dem Motor in Reihe geschaltete elektronische Schalter dient für den Fahrbetrieb, wie vorher beschrieben. Zum Bremsen wird der mit der Gleichspannungsquelle und dem Motor in Reihe liegende Schalter geöffnet, wobei der Motor als Generator arbeitet und mit dem zu diesem parallel liegenden elektronischen Schalter kurzgeschlossen werden kann. Unter der Annahme eines gleichbleibenden Erregerfeldes hat die Spannung des Generators die gleiche Polarität, jedoch ist die Stromflußrichtung entgegengesetzt zu jener beim Motorbetrieb. Dies bedeutet, daß bei einem Gleichstrom-Reihenschlußmotor die Erregerwicklung zum Bremsen umgepolt werden muß, wogegen bei einem Motor mit Nebenschlußcharakteristik, beispielsweise einem Permanentfeldmotor, keine besonderen Maßnahmen zu treffen sind. Durch das Kurzschließen des Motors mit der Funktion eines Generators fließt ein zeitlich ansteigender Strom aus dem Generator durch die beispielsweise von der Motorwicklung gebildete Speicherdrossel und beim Öffnen des Stromkreises entsteht an der Speicherdrossel eine Selbstinduktionsspannung, die zusammen mit der Generatorspannung die Spannung der Gleichspannungsquelle übersteigt, wodurch ein zeitlich abnehmender Stromfluß über die Freilaufdiode des für den Motorbetrieb vorgesehenen anderen elektronischen Schalters zur Gleichspannungsquelle, beispielsweise einem Akkumulator, und somit eine Energierückgewinnung zustandekommt. Dies entspricht einem Zwei-Quadranten-Betrieb. Bei dem Umkehr der Energieflußrichtung wird aus dem Tiefsetzsteller ein Hochsetzsteller. Es kann somit auch bei einer sehr kleinen Generatorspannung (geringe Drehzahl bzw. geringe Fahrgeschwindigkeit) Energie rückgespeist werden.

Wenn die Drehrichtung des Motors umkehrbar sein soll, muß die dem Motor angebotene Spannung umgepolt werden können. Dies läßt sich dadurch erreichen, daß an die Gleichspannungsquelle parallel zwei Reihenschaltungen je zweier elektronischer Schalter nach Art einer Brückenschaltung angeschlossen werden und der Motor als Brückendiagonale angeschlossen wird. Die Schaltung ist symmetrisch ausgeführt, wobei ein Brückenzweig, wie vorher angegeben, betrieben wird, während der andere Zweig dauernd eine Masseverbindung herstellt. Bei Umkehr der Drehrichtung werden die Funktionen der beiden Zweige gegeneinander vertauscht. Dies entspricht einem Vier-Quadranten-Betrieb.

Bei neueren Motorkonzepten geht man dazu über, die eine kurze Lebensdauer aufweisenden Verschleißteile, wie den Kollektor und insbesondere die Bürsten, zu vermeiden und durch elektronische Schalter zu ersetzen, wodurch außerdem die Kommutierung verbessert wird, wobei jegliche beweglichen Stromzuführungen zum Rotor vermeidbar sind, wenn man diesen mit Permanentmagneten ausstattet und im Stator ruhende Wicklungen vorsieht. Man spricht dann von kollektorlosen Gleichstrommotoren oder elektronisch kommutierten Gleichstrommotoren, welche aber eigentlich Synchronmotoren mit permanenter Erregung sind. Dabei ist ein Drehgeber vorgesehen, mit welchem die Ansteuerung der Wicklungen zur Drehlage synchronisiert wird. Im Zusammenhang mit einer elektronischen Steuerschaltung für die Speisung solcher Motoren lassen sich die Kommutierungsschalter gleichzeitig auch als Schalter für einen Tiefsetzsteller benützen. Bei geeigneter Motorbauform lassen sich die Wicklungsinduktivitäten als Speicherdrosseln einsetzen. Zur Ansteuerung ist eine Drehstrom-Brückenschaltung vorzusehen.

Wenn die Nennspannung des Motors nicht ungefähr mit der Spannung der Gleichspannungsquelle übereinstimmt, läßt sich dem durch den Einsatz eines sogenannten Gleichspannungswandlers mit einem Transformator abhelfen, wobei insbesondere für größere Leistungen zweckmäßig eine Gegentaktschaltung mit symmetrischem Betrieb Anwendung findet, bei welcher an der Sekundärseite des Transformators ebenfalls zwei elektronische Schalter vorgesehen und an einem Punkt zusammengeführt sind, zwischen dem und Masse der Motor angeschlossen ist. Die primärseitigen elektronischen Schalter werden wechselweise, aber nicht lückenlos aneinander anschließend ein- und ausgeschaltet. Dabei wird die Spannung der Gleichspannungsquelle entsprechend dem Übersetzungsverhältnis r des Transformators übersetzt, wobei jeweils die Freilaufdiode eines der beiden sekundärseitigen, elektronischen Schalter leitet und der Strom durch die Speicherdrossel und die Last zunimmt. Unmittelbar nach dem Abschalten des jeweiligen primärseitigen elektronischen Schalters kann der Strom durch die Speicherdrossel weiterfließen, indem sich der Strom symmetrisch auf beide Wicklungshälften des Transformators und auf die beiden Freilaufdioden der sekundärseitigen elektronischen Schalter aufteilt. Der Transformator wird in diesem Zustand bifilar betrieben und es erfolgt keine Induktionswirkung auf die Primärseite. Zusätzlich überlagert sich der abklingende Magnetisierungsstrom des Transformators in einer asymmetrischen Weise. Beim Bremsen mit Energierückgewinnung bleiben die primärseitigen elektronischen Schalter offen, wobei zunächst beide sekundärseitigen elektronischen Schalter geschlossen sind, der Strom in der Speicherdrossel zunimmt und somit der Transformator bifilar betrieben wird, so daß es keine Induktionswirkung gibt. Anschließend wird einer der beiden sekundärseitigen elektronischen Schalter geöffnet, wobei die Summe aus der Induktionsspannung der Speicherdrossel und der Generatorspannung zur Gleichspannungsquelle rücktransformiert wird und der Stromfluß in die Gleichspannungsquelle über die Freilaufdiode eines der beiden primärseitigen elektronischen Schalter ermöglicht wird.

Ein solcher Wandler ist auch für den Zwei-Quadranten-Betrieb geeignet.

Prinzipiell könnte mit den bekannten Schaltungsanordnungen eine nahezu beliebige Spannungsumsetzung vorgenommen werden, sofern ein entsprechendes Tastverhältnis für die elektronischen Schalter eingestellt wird. Mit dem zusätzlich vorgesehenen Transformator des Gleichspannungswandlers läßt sich eine fixe Anpassung in einem weiten Bereich vornehmen, die Dynamik (kleinste zu größte Ausgangsspannung) ist aber über die Variation des Tastverhältnisses vorzunehmen. Hierin liegt eine Schwäche der bekannten Schaltungsanordnungen, da sich zwar extreme Tastverhältnisse (z.B. Werte unter 0,1 oder über 0,9) einstellen lassen, wobei sich aber der Wirkungsgrad an den Bereichsgrenzen drastisch verändert. Dies liegt daran, daß die übertragene Leistung proportional zum Strommittelwert, die Verlustleistung in den von Transistoren gebildeten elektronischen Schaltern aber proportional dem Quadrat des Strom-Effektivwertes ist. Das Verhältnis Mittelwert zu Effektivwert verschlechtert sich mit zunehmendem Tastverhältnis p bzw. (1 - p).

Die Erfindung zielt darauf ab, eine elektronische Steuerschaltung für die Speisung von ohmisch-induktiven Lasten durch Gleichstromimpulse mit veränderbarem Tastverhältnis anzugeben, welche ohne übermäßige Variation des Tastverhältnisses die Erzielung einer möglichst großen Spannungsdynamik ermöglicht, wie sie besonders für Fahrzeugantriebe benötigt wird.

Zur Lösung dieser Aufgabe besteht bei einer elektronischen Steuerschaltung der eingangs angegebenen Art die Erfindung darin, daß zwischen dem Verbindungspunkt der vom Transformator abgewendeten Anschlüsse der sekundärseitigen elektronischen Schalter und dem vom Transformator abgewendeten Pol der Gleichspannungsquelle wenigstens eine Reihenschaltung zweier von Freilaufdioden überbrückter elektronischer Schalter angeschlossen ist, deren Freilaufdioden gegensinnig zu den Freilaufdioden der beiden sekundärseitigen elektronischen Schalter liegen, wobei die Last parallel zu einem der in Reihe geschalteten elektronischen Schalter angeschlossen ist. Alternativ kann die Schaltung in der Weise ausgeführt sein, daß die Last zwischen dem Verbindungspunkt der vom Transformator abgewendeten Anschlüsse der sekundärseitigen elektronischen Schalter und dem vom Transformator abgewendeten Pol der Gleichspannungsquelle angeschlossen ist und daß in Reihe mit der Gleichspannungsquelle ein von einer Freilaufdiode überbrückter elektronischer Schalter vorgesehen ist, dessen Freilaufdiode gegensinnig zu den Freilaufdioden der beiden sekundärseitigen elektronischen Schalter liegt, oder an die Gleichspannungsquelle eine Halbbrücke in Form einer Reihenschaltung zweier von Freilaufdioden überbrückter elektronischer Schalter angeschlossen ist, deren Mittelpunkt mit der Last an der vom Transformator abgewandten Seite verbunden ist.

Durch diese Kombinationen von eine Kette bildenden elektronischen Schaltern steht durch entsprechende Steuerung der einzelnen Schalter ein Tiefsetzsteller und ein modifizierter Transformator-Tiefsetzsteller für den Fahrbetrieb zur Verfügung. Ein zu steuernder Motor läßt sich von der Spannung der Gleichspannungsquelle über den Tiefsetzsteller in einem Drehzahlbereich eines "ersten Ganges" betreiben, wobei die primärseitigen elektronischen Schalter des Gleichspannungswandlers nicht in Betrieb sind, und nach Inbetriebnahme des Gleichspannungswandlers kann über den sekundärseitigen Tiefsetzsteller der Drehzahlbereich eines "zweiten Ganges" durchfahren werden, dem eine gegenüber der Spannung der Gleichspannungsquelle entsprechend erhöhte Betriebsspannung zuzuordnen ist. Dabei ist synchron zu den wechselweise angesteuerten primärseitigen elektronischen Schaltern der zum Motor parallelgeschaltete elektronische Schalter anzusteuern.

Schließlich ist noch ein dritter Betriebsfall möglich, wobei der mit dem Motor in Reihe liegende elektronische Schalter der beiden in Reihe liegenden elektronischen Schalter immer leitet und somit der Stromanstieg dem zweiten Betriebsfall entspricht, der Stromabfall aber durch Öffnen des jeweils geschlossen gewesenen primärseitigen elektronischen Schalters erreicht wird. Dies hat zur Folge, daß die Speicherdrossel nicht mehr gegen Masse, sondern gegen die Spannung der Gleichspannungsquelle entladen wird.

Die vorstehend angebotene alternative Lösung ermöglicht die gleichen Funktionen unter Einsparung eines elektronischen Schalters, wobei die Wirkung des weggefallenen, zum Motor parallel geschalteten elektronischen Schalters dadurch erzielt wird, daß die beiden primärseitigen elektronischen Schalter gleichzeitig geschlossen werden.

Zur Erzielung der notwendigen Funktion der Speicherdrossel ohne Erfordernis, diese als gesondertes, konzentriertes Bauelement vorsehen zu müssen, kann die Anordnung so getroffen sein, daß die Last von einem Gleichstrom-Kollektormotor mit Permanentmagnet-Stator und eisenlosem Rotor gebildet ist, dessen Ankerinduktivität als Speicherdrossel dient. Dabei ist insbesondere für Fahrzeuge eine Ausbildung günstig, bei welcher der Rotor als eisenfreier Scheibenläufer ausgebildet ist. Dies ermöglicht die Unterbringung des Antriebsmotors samt einem gegebenenfalls erforderlichen Untersetzungsgetriebe in einer Radnabe mit geringer axialer Baulänge.

Eine Ausgestaltung der Anordnung mit großen Wartungsintervallen ohne Notwendigkeit einer Kontrolle der Abnützung von Kohlebürsten weist das Merkmal auf, daß die Last von einem sogenannten kollektorlosen Gleichstrommotor mit einem Drehgeber, einem Permanentmagnet-Rotor und mehreren Stator-Phasenwicklungen gebildet ist, wobei die Anzahl der zwischen dem Verbindungspunkt der vom Transformator abgewandten Anschlüsse der sekundärseitigen elektronischen Schalter und dem vom Transformator abgewandten Pol der Gleichspannungsquelle angeschlossenen Reihenschaltungen je zweier von Freilaufdioden überbrückter elektronischer Schalter der Anzahl der Stator-Phasenwicklungen entspricht.

Eine Weiterbildung der Steuerschaltung besteht darin, daß bei einem Motor für beide Drehrichtungen der Motor bzw. jede Motorwicklung in der Diagonale einer Brückenschaltung aus von Freilaufdioden überbrückten elektronischen Schaltern liegt, wobei alle Brückenschaltungen zwischen dem Verbindungspunkt der vom Transformator abgewendeten Anschlüsse der sekundärseitigen elektronischen Schalter und dem vom Transformator abgewandten Pol der Gleichspannungsquelle angeschlossen sind.

Die Erfindung wird nachfolgend an Hand von in der Zeichnung dargestellten Ausführungsbeispielen und Betriebsdiagrammen näher erläutert. Es zeigen: Fig.I eine erste Ausführungsform der erfindungsgemäßen Steuerschaltung; Fig.2 eine zweite Ausführungsform der erfindungsgemäßen Steuerschaltung; Fig.3 in einem Diagramm schematisch die mit der erfindungsgemäßen Steuerschaltung erzielbaren Betriebsfälle; Fig.4 mit mehr Einzelheiten die verschiedenen Betriebsfälle beim Beschleunigen und beim Verzögern; die Fig.5 bis 16 den jeweiligen Stromlauf in den einzelnen Betriebszuständen bei verschiedenen Gängen für den Fahrbetrieb und für den Bremsbetrieb; Fig.17 eine Ausführungsform der Steuerschaltung für einen in beiden Drehrichtungen antreibbaren und bremsbaren Kollektormotor; Fig.18 eine Ausführungsform der Steuerschaltung fÜr einen kollektorlosen Gleichstrommotor; und Fig.I9 eine dritte Ausführunsform der erfindungsgemäßen Steuerschaltung.

Bei der in Fig.I dargestellten ersten Ausführungsform einer erfindungsgemäßen elektronischen Steuerschaltung sind sämtliche elektronischen Schalter von MOS-Feldeffekttransistoren $Q_I$ bis $Q_6$ gebildet. Eine Gleichspannungsquelle B ist von einem Akkumulator gebildet und als zu steuernder Motor M ist ein Permanentfeld-Kollektormotor vorgesehen. Um den von den Transistoren $Q_I$ und $Q_2$ gebildeten Tiefsetzsteller mit der Spannung der Gleichspannungsquelle B oder einer höheren Spannung betreiben zu können, ist ein als Autotransformator ausgebildeter Transformator T vorgesehen. Dank der Ausbildung des Transformators T als Autotransformator wird für die Wicklung wenig Drahtmaterial benötigt und der Verbraucher kann dennoch bei Bedarf eine Spannung erhalten, die sich aus der Summe der Spannung der Gleichspannungsquelle B und der transformierten Spannung zusammensetzt. Die Baugröße des Transformators T wird aber nur von der transformierten Leistung bestimmt, da der Gleichanteil, der direkt der Gleichspannungsquelle B entnommen wird, den Transformator T bifilar durchsetzt.

Bei gesperrten Transistoren $Q_3$, $Q_4$ gelangt der Strom von der Gleichspannungsquelle B bifilar über den Transformator T und die Freilaufdioden der Transistoren $Q_5$, $Q_6$ bei gesperrtem Transistor $Q_1$ über den Transistor $Q_2$ an den Motor M. Die Transistoren $Q_1$ und $Q_2$ werden beim Fahrbetrieb im ersten Gang entsprechend einem Tastverhältnis $p = t_{on}/(t_{on} + t_{off})$ wechselweise geöffnet und geschlossen, wobei sich $t_{on}$ und $t_{off}$ auf die Betriebsweise des Transistors $Q_2$ beziehen und die Summe von $t_{on}$ und $t_{off}$ die Zykluszeit T ist. Die wirksame Betriebsspannung des Motors M ergibt sich dabei zu $U_{mot} = p^*U_{batt}$.

Ein zweiter Gang des Motors M ergibt sich unter Ausnützung der Spannungsübersetzung des Transformators T, wobei für den Betrieb des Spannungswandlers abwechselnd $Q_3$ und $Q_4$ synchron zu $Q_1$ angesteuert werden müssen. Die wirksame Betriebsspannung des Motors M ergibt sich dann zu $U_{mot} = p^*(l + r)^*U_{batt}$, wobei r das Übersetzungsverhältnis des Transformators T ist.

Schließlich läßt sich der Motor M in einem dritten Gang betreiben, wenn $Q_2$ immer leitet und somit der Stromanstieg demjenigen des zweiten Ganges entspricht, der Stromabfall aber durch Ausschalten von $Q_3$ bzw. $Q_4$ erreicht wird. Dies hat zur Folge, daß die von der Rotorwicklung des Motors M gebildete Speicherdrossel nicht mehr gegen Masse, sondern gegen die Spannung $U_{batt}$ der Gleichspannungsquelle B entladen wird. Es ergibt sich dabei eine weitere Übersetzungscharakteristik und die wirksame Betriebsspannung des Motors M beträgt $U_{mot} = (1 + r^*P)^*U_{batt}$.

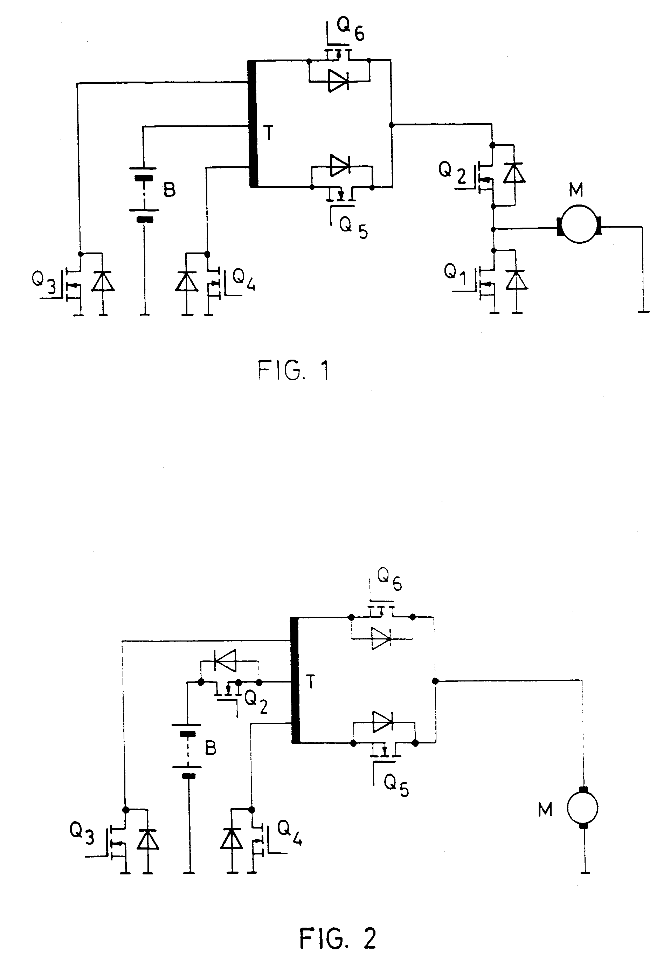

Eine abgewandelte Ausführungsform der erfindungsgemäßen Steuerschaltung ist in Fig.2 dargestellt. Es lassen sich damit alle vorher besprochenen Funktionen erzielen, jedoch wird der Transistor $Q_1$ dadurch eingespart, daß an Stelle einer Ansteuerung von $Q_1$ die Transistoren $Q_3$ und $Q_4$ gleichzeitig in den leitenden Zustand gebracht werden.

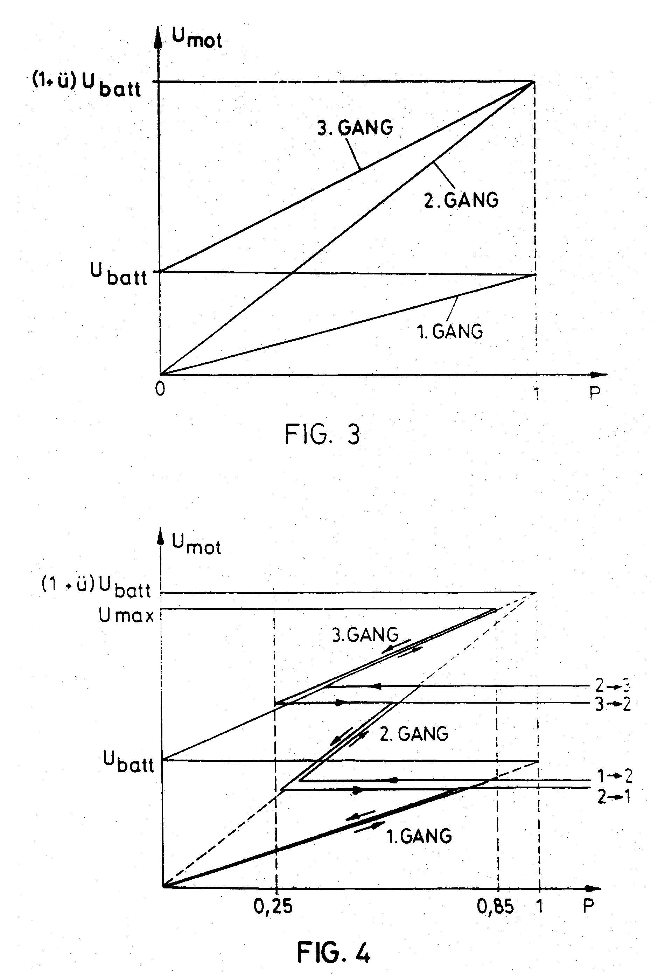

Fig.3 zeigt schematisch einen Vergleich der Spannungsübersetzung für die drei Gänge des Motors M und Fig.4 zeigt genauer, wie durch Wechseln der Betriebsart (elektronischer Gangwechsel) bei bestimmten, dem Motor angebotenen Betriebsspannungen der gesamte Versorgungsspannungsbereich von O bis $(l + r)^*U_{batt}$ durchlaufen werden kann, ohne daß das Tastverhältnis p vorgegebene Ober- und Untergrenzen überschreitet. Der Wechsel zwischen den einzelnen Betriebsarten entspricht weitgehend der Funktion eines mechanischen Schaltgetriebes, so daß von elektronischen oder elektrischen Gängen gesprochen werden kann. Der Vorteil gegenüber einem mechanischen Schaltgetriebe liegt darin, daß nur die Ansteuerung der Transistorschalter geändert werden muß. Dies ist mit elektronischen Logikverknüpfungen mit geringem Aufwand durchführbar und kann innerhalb eines Schaltzyklus vorgenommen werden, so daß keine merkbare Unterbrechung des Energieflusses bzw. des Drehmomentes erfolgt. Eine mechanische Kupplung wie bei Schaltgetrieben ist hiebei nicht erforderlich. Weiters kann der elektronische Gangwechsel mittels zweier Vergleicher, welche die Motorspannung mit vorgegebenen Schaltschwellen vergleichen, automatisiert werden.

Ein wichtiges Kriterium zur Erzielung eines hohen Wirkungsgrades beim Betrieb von Transistoren als Schalter verlangt das Einhalten von minimalen Ein- und Ausschaltzeiten. Ein weiteres Kriterium verlangt, daß der Stromrippel (Motorstromänderung innerhalb eines Schaltzyklus) in Grenzen gehalten wird. Der Stromrippel ergibt sich aus der Höhe des Spannungswechsels zwischen Ein- und Ausschaltphase an der Speicherdrossel und deren Induktivität sowie der absoluten Dauer der jeweiligen Schaltphase ($t_{on}$, $t_{off}$). Der Spannungswechsel innerhalb eines Zyklus ist vom elektrischen Gang abhängig. Für das Übersetzungsverhältnis ist jedoch nur das Verhältnis der Schaltphasen ($t_{on}{:}t_{off}$) maßgeblich. Diese Problematik kann mit herkömmlichen Pulsdauermodulatoren mit fester Zykluszeit ($T = t_{on} + t_{off}$) nicht zufriedenstellend gelöst werden.

In der bevorzugten Ausgestaltung wird daher zweckmäßig nicht die jeweilige Schaltzeit vorgegeben, vielmehr wird mittels einer Regelung der Stromrippel selbst überwacht.

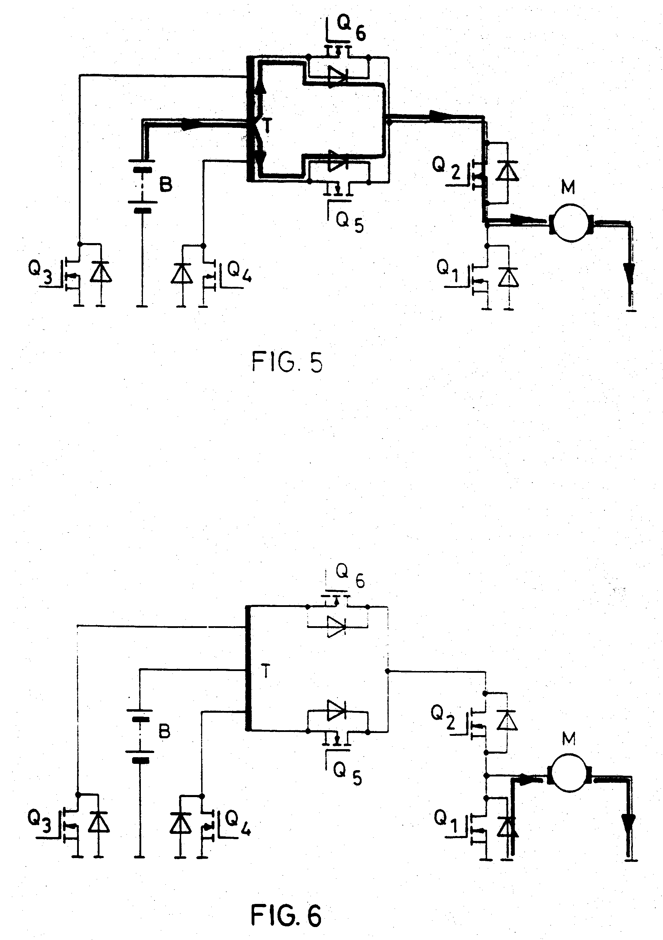

In den Fig.5 bis 8 ist der Stromlauf für die einzelnen Betriebszustände des ersten Ganges bei der Schaltungsanordnung gemäß Fig.1 eingetragen.

Beim Beschleunigen und Fahren mit gleichförmiger Geschwindigkeit im ersten Gang ist der Gleichspannungswandler mit den Transistoren $Q_3$ und $Q_4$ außer Betrieb, es sind die sekundärseitigen Transistoren $Q_5$ und $Q_6$ abgeschaltet und ebenso ist der Transistor $Q_1$ dauernd abgeschaltet. Die Dosierung des dem Motor M aus der Gleichspannungsquelle B zuzuführenden Stromes, der bifilar über den Transformator T und die Freilaufdioden der Transistoren $Q_5$ und $Q_6$ fließt, erfolgt durch periodisches Ein- und Ausschalten des Transistors $Q_2$. Der Zustand des Stromflusses aus der Gleichspannungsquelle B ist in Fig.5 mit dicken Linien eingezeichnet. Durch die Wirkung der im Motor M enthaltenen Speicherdrossel hört der Stromfluß durch den Motor nach dem Abschalten des Transistors $Q_2$ nicht plötzlich auf, sondern es fließt über die Freilaufdiode des Transistors $Q_I$ noch weiter ein zeitlich abnehmender Strom in gleicher Richtung durch den Motor M; dieser Zustand ist in Fig.6 dargestellt.

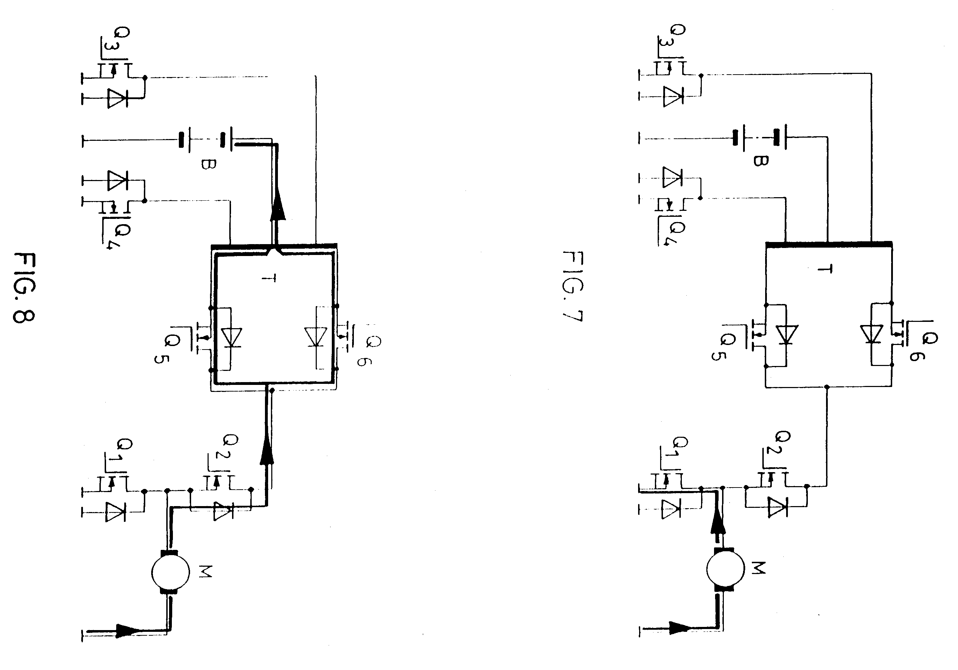

Zum Bremsen des als Generator laufenden Motors, wobei die Polarität der Spannung gleich ist wie im Motorbetrieb, der Strom jedoch entgegengesetzt gerichtet ist, sind die Transistoren $Q_3$ und $Q_4$ des Spannungswandlers abgeschaltet und ebenso ist der Transistor $Q_2$ abgeschaltet, wogegen die Transistoren $Q_5$ und $Q_6$ leitend sind. Wenn der Motor M bei hoher Drehzahl eine Spannung erzeugt, die höher ist als die Spannung der Gleichspannungsquelle B, erfolgt eine Stromrücklieferung über die Freilaufdiode des Transistors $Q_2$, über die leitenden Transistoren $Q_5$ und $Q_6$ sowie bifilar über den Transformator T an die Gleichspannungsquelle B. Bei kleineren Drehzahlen des Motors M, u.zw. nahezu bis zum Stillstand desselben, lassen sich durch periodisches Schließen und Öffnen des Transistors $Q_I$, d.h. periodisches Kurzschließen des als Generator laufenden Motors und der darin enthaltenen Speicherdrossel Spannungsspitzen erzeugen, die unmittelbar nach dem Abschalten des Transistors $Q_I$ höher sind als die Spannung der Gleichspannungsquelle B, so daß auch bei kleinen Drehzahlen des Motors eine Energierücklieferung über die Freilaufdiode des Transistors $Q_2$ an die Gleichspannungsquelle B erzielbar ist. Dies ist in den Fig.7 und 8 dargestellt.

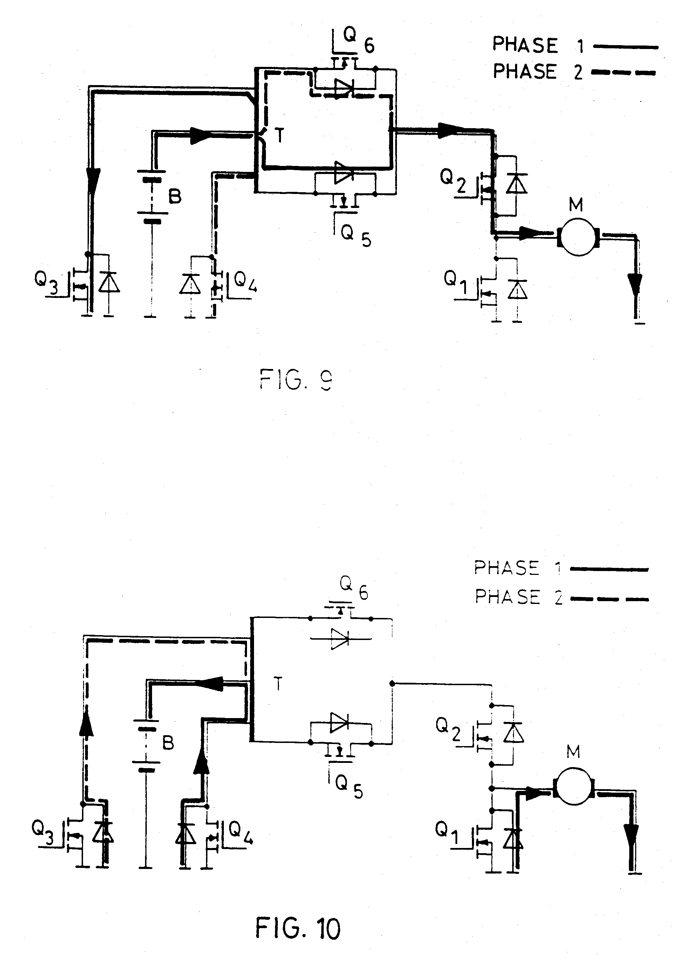

Beim Beschleunigen bzw. Fahren mit gleichförmiger Geschwindigkeit im zweiten Gang werden die Transistoren $Q_3$ und $Q_4$ des Gleichspannungswandlers abwechselnd in den leitenden Zustand gebracht. Im Takt mit dem Einschalten des Transistors $Q_3$ und des Transistors $Q_4$ wird auch jeweils der Transistor $Q_2$ leitend gemacht, wobei Strom vom Transformator T über die Freilaufdiode des gesperrten Transistors $Q_5$ oder über die Freilaufdiode des gesperrten Transistors $Q_6$ zum Motor M fließt (Fig.9). Nach dem Abschalten des Transistors $Q_2$ fließt über die Freilaufdiode des abgeschalteten Transistors $Q_I$ weiterhin ein zeitlich abnehmender Strom durch den Motor M (Fig.10).

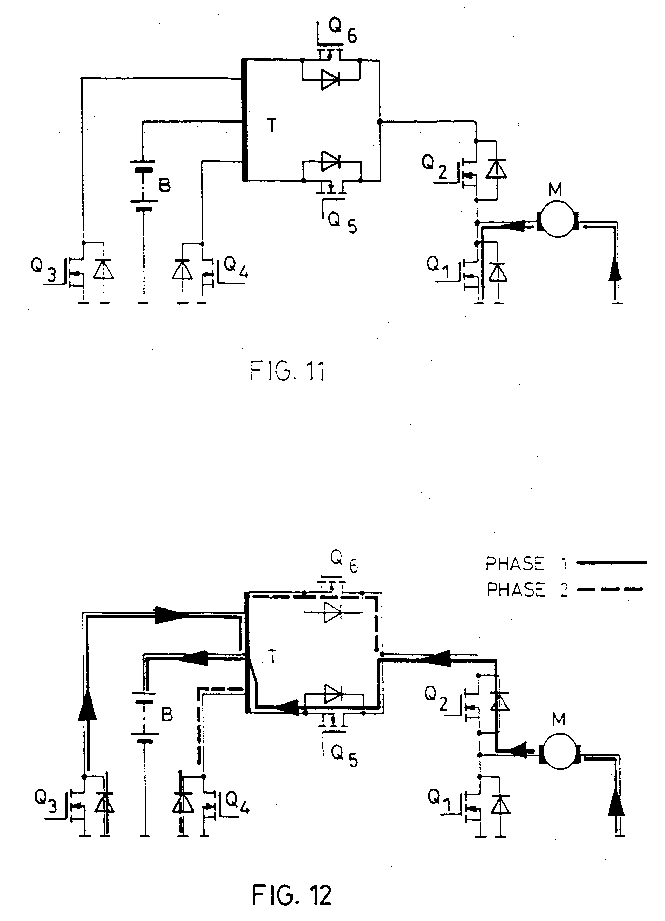

Beim Bremsen im zweiten Gang bleiben die Transistoren $Q_3$ und $Q_4$ des Gleichspannungswandlers ebenso wie der Transistor $Q_2$ abgeschaltet. Der Transistor $Q_I$ wird taktmäßig ein- und ausgeschaltet und die Transistoren $Q_5$ und $Q_6$ werden abwechselnd ein- und ausgeschaltet. Durch das periodische Kurzschließen des Motors M und der darin enthaltenen Speicherdrossel werden Spannungsimpulse erzeugt, welche über die Freilaufdiode des gesperrten Transistors $Q_2$ und über die

abwechselnd leitend gesteuerten Transistoren $Q_5$ bzw. $Q_6$ an den Transformator T gelangen und entsprechend dessen Übersetzungsverhältnis der Gleichspannungsquelle B zugeführt werden (Fig.11 und 12).

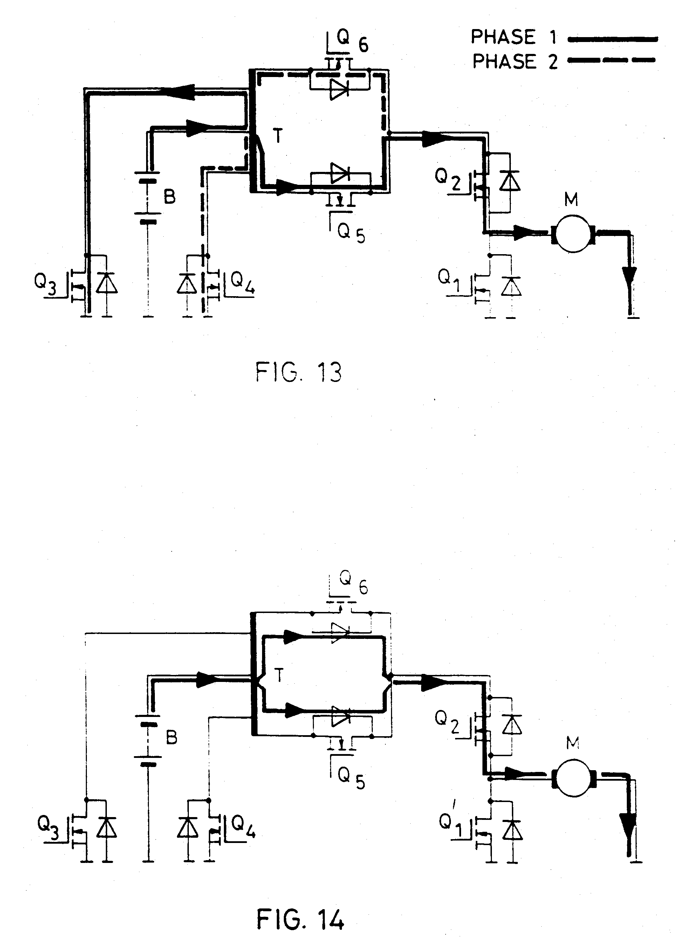

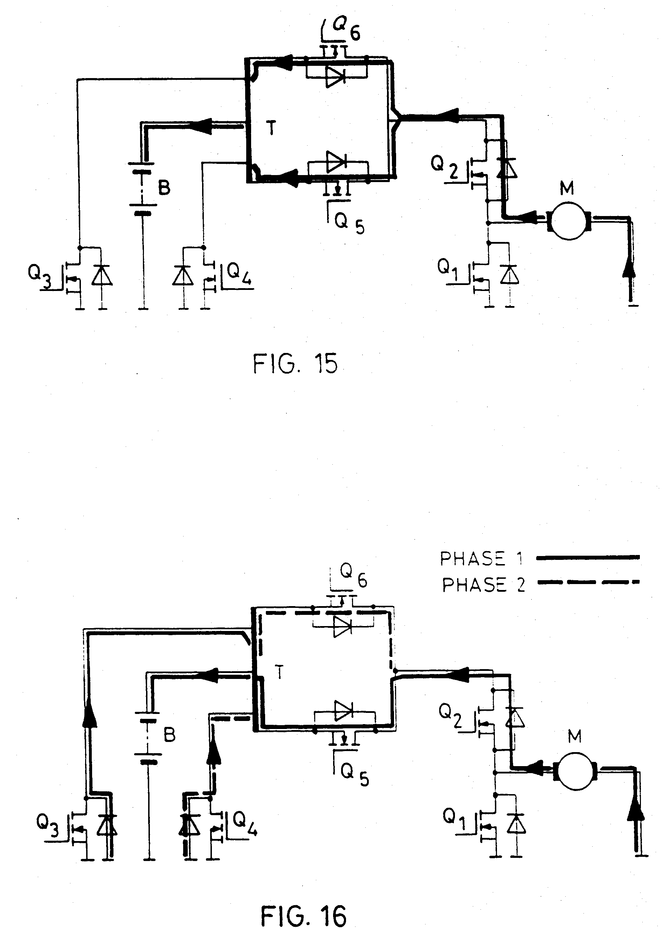

Zum Beschleunigen bzw. Fahren mit gleichförmiger Geschwindigkeit im dritten Gang wird bei abgeschalteten Transistoren $Q_I$,$Q_5$ und $Q_6$ sowie eingeschaltetem Transistor $Q_2$ der Spannungswandler mit den Transistoren $Q_3$ und $Q_4$ ein- und ausgeschaltet, wobei im eingeschalteten Zustand des Spannungswandlers die Transistoren $Q_3$, $Q_4$ wechselweise angesteuert werden. Der Stromfluß zum Motor M erfolgt dabei während der Taktung des Spannungswandlers jeweils über eine Hälfte der Transformatorwicklung und die entsprechende Freilaufdiode des Transistors $Q_5$ oder $Q_6$ und den Transistor $Q_2$ und bei stillgesetztem Gleichspannungswandler bifilar über den Transformator T und die Freilaufdioden beider Transistoren $Q_5$ und $Q_6$ sowie über den eingeschalteten Transistor $Q_2$ (Fig.13 und 14). Beim Bremsen in dritten Gang erfolgt das "Kurzschließen" des schnellaufenden Motors M über die Freilaufdiode des Transistors $Q_2$, über die beiden leitend gesteuerten Transistoren $Q_5$ und $Q_6$ sowie bifilar über den Transformator T an die Gleichspannungsquelle B und periodisch abwechselnd hiezu werden die Transistoren $Q_5$ und $Q_6$ wechselweise leitend gesteuert, so daß die Energierücklieferung transformatorisch erfolgt und primär der Stromkreis wechselweise über jeweils eine Freilaufdiode der Transistoren $Q_3$ und $Q_4$ geschlossen ist (Fig.15 und 16).

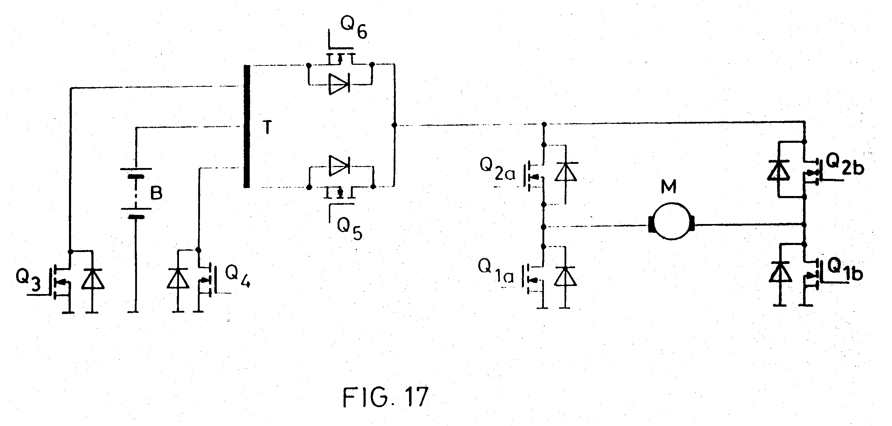

In Fig.17 ist eine Erweiterung der Schaltunganordung für den wahlweisen Betrieb eines Motors M in beiden Drehrichtungen gezeigt, wobei anstelle der Transistoren $Q_I$ und $Q_2$ von Fig.I eine Brückenschaltung aus vier Transistoren $Q_{Ia}$, $Q_{2a}$, $Q_{Ib}$, $Q_{2b}$ vorgesehen ist. Dadurch wird ein Vier-Quadrantenbetrieb ermöglicht, wobei beispielsweise zum Fahren in einer Richtung der Transistor $Q_{Ib}$ dauernd geschlossen ist und der Transistor $Q_{2a}$ getaktet betrieben wird, während die Transistoren $Q_{Ia}$ und $Q_{2b}$ dauernd abgeschaltet sind; für die andere Drehrichtung wird $Q_{Ia}$ dauernd geschlossen und $Q_{2b}$ getaktet angesteuert, während $Q_{Ib}$ und $Q_{2a}$ dauernd abgeschaltet sind.

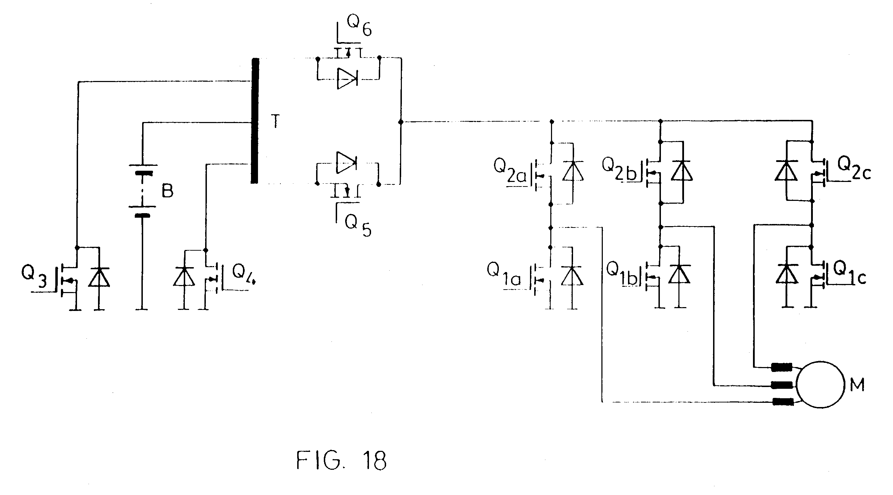

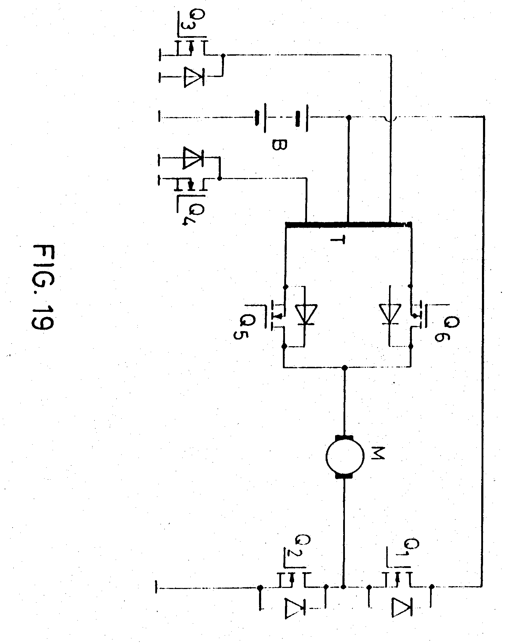

Schließlich zeigt Fig.18 eine Anordnung für einen kollektorlosen Gleichstrommotor M, der einen permanentmagnetischen Rotor ohne bewegliche Stromzuführungen und einen Stator mit drei Phasenwicklungen aufweist. Die Anzahl der Phasenwicklungen könnte auch größer als drei sein. Im Vergleich zur Anordnung gemäß Fig.I ist hiebei eine der Anzahl der Phasenwicklungen entsprechende Anzahl von Reihenschaltungen je zweier Transistoren $Q_{Ia}$ $Q_{2a}$; $Q_{Ib}$, $Q_{2b}$; $Q_{Ic}$, $Q_{2c}$ vorzusehen, welche Reihenschaltungen zeitlich zyklisch aufeinanderfolgend anzusteuern sind.

In Fig.l9 ist eine weitere Ausführungsform dargestellt, wobei die Last bzw. der Motor M mit dem Verbindungspunkt der vom Transformator abgewandten Anschlüsse der sekundärseitigen elektronischen Schalter und dem Mittelpunkt einer Halbbrücke der mit Freilaufdioden überbrückten Schalter bzw. Transistoren $Q_l$ und $Q_2$ liegt, welche mit der Gleichspannungsquelle B verbunden sind.

**Patentansprüche**

1. Elektronische Steuerschaltung für die Speisung von ohmischinduktiven Lasten (M) durch Gleichstromimpulse mit veränderbarem Tastverhältnis, insbesondere Elektromotoren, vorzugsweise solche, in deren Stator oder Rotor ein magnetisches Gleichfeld erzeugt wird, mit einem einen Transformator (T) aufweisenden Steller, wobei der Transformator (T) primärseitig über von Freilaufdioden überbrückte elektronische Schalter ($Q_3$, $Q_4$) in Gegentaktanordnung an eine Gleichspannungsquelle (B) angeschlossen ist und sekundärseitig über symmetrisch mit dem Transformator (T) verbundene, von Freilaufdioden überbrückte elektronische Schalter ($Q_5$, $Q_6$) mit der Last (M) in Verbindung steht, wobei die Sekundärseite des Transformators (T) mit der Gleichspannungsquelle (B) galvanisch verbunden oder verbindbar ist und wobei der Transformator (T) vorzugsweise als Autotransformator mit einer einzigen durchgehenden Wicklung mit Mittelanzapfung und zu dieser symmetrischen Anzapfungen ausgebildet ist, dadurch gekennzeichnet, daß zwischen dem Verbindungspunkt der vom Transformator (T) abgewendeten Anschlüsse der sekundärseitigen elektronischen Schalter ($Q_5$, $Q_6$) und dem vom Transformator (T) abgewendeten Pol der Gleichspannungsquelle (B) wenigstens eine Reihenschaltung zweier von Freilaufdioden überbrückter elektronischer Schalter ($Q_1$, $Q_2$; $Q_{1a}$, $Q_{1b}$, $Q_{1c}$, $Q_{2a}$, $Q_{2b}$, $Q_{2c}$) angeschlossen ist, deren Freilaufdioden gegensinnig zu den Freilaufdioden der beiden sekundärseitigen elektronischen Schalter ($Q_5$, $Q_6$) liegen, wobei die Last (M) parallel zu einem der in Reihe geschalteten elektronischen Schalter angeschlossen ist, oder daß die Last (M) zwischen dem Verbindungspunkt der vom Transformator (T) abgewendeten Anschlüsse der sekundärseitigen elektronischen Schalter ($Q_5$, $Q_6$) und dem vom Transformator (T) abgewendeten Pol der Gleichspannungsquelle (B) angeschlossen ist und daß in Reihe mit der Gleichspannungsquelle (B) ein von einer Freilaufdiode überbrückter elektronischer Schalter vorgesehen ist, dessen Freilaufdiode gegensinnig zu den Freilaufdioden der beiden sekundärseitigen elektronischen Schalter ($Q_5$, $Q_6$) liegt, oder an die Gleichspannungsquelle (B) eine Halbbrücke in Form einer Reihenschaltung zweier von Freilaufdioden überbrückter elektronischer Schalter ($Q_1$, $Q_2$) angeschlossen ist, deren Mittelpunkt mit der Last (M) an der vom Transformator (T) abgewandten Seite verbunden ist.

2. Steuerschaltung nach Anspruch 1, dadurch gekennzeichnet, daß die Last (M) von einem Gleichstrom-Kollektormotor mit Permanentmagnet-Stator und eisenlosem Rotor gebildet ist, dessen Ankerinduktivität als Speicherdrossel dient.

3. Steuerschaltung nach Anspruch 2, dadurch gekennzeichnet, daß der Rotor als eisenfreier Scheibenläufer ausgebildet ist.

4. Steuerschaltung nach Anspruch 1, dadurch gekennzeichnet, daß die Last (M) von einem sogenannten kollektorlosen Gleichstrommotor mit einem Drehgeber, einem Permanentmagnet-Rotor und mehreren Stator-Phasenwicklungen gebildet ist, wobei die Anzahl der zwischen dem Verbindungspunkt der vom Transformator abgewendeten Anschlüsse der sekundärseitigen elektronischen Schalter ($Q_5$, $Q_6$) und dem vom Transformator (T) abgewendeten Pol der Gleichspannungsquelle (B) angeschlossenen Reihenschaltungen je zweier von Freilaufdioden überbrückter, elektronischer Schalter ($Q_{1a}$, $Q_{1b}$; $Q_{1c}$, $Q_{2a}$, $Q_{2b}$, $Q_{2c}$) der Anzahl der Stator-Phasenwicklungen entspricht.

5. Steuerschaltung nach einem der Ansprüche 1 bis 4, dadurch gekennzeichnet, daß bei einem Motor (M) für beide Drehrichtungen der Motor bzw. jede Motorwicklung in der Diagonale einer Brückenschaltung aus von Freilaufdioden überbrückten elektronischen Schaltern ($Q_{1a}$, $Q_{1b}$; $Q_{2a}$, $Q_{2b}$) liegt, wobei alle Brückenschaltungen zwischen dem Verbindungspunkt der vom Transformator (T) abgewendeten Anschlüsse der sekundärseitigen elektronischen Schalter ($Q_5$, $Q_6$) und dem vom Transformator (T) abgewendeten Pol der Gleichspannungsquelle (B) angeschlossen sind.

**Claims**

1. Electronic control circuit for feeding ohmically inductive loads (M) by direct current pulses with changeable pulse-duty factors, in particular electromotors, preferably those in whose stator or rotor a magnetic d.c. field is generated, comprising an actuator including a transformer (T), which transformer (T) on its primary is connected to a d.c. voltage source (B) in a push-pull arrangement via electronic switches ($Q_3$, $Q_4$) bridged by recovery diodes and on its secondary communicates with the load (M) via electronic switches ($Q_5$, $Q_6$) symmetrically connected with the transformer (T) and bridged by recovery diodes, the secondary of the transformer (T) being galvanically connected or connectable with the d.c. voltage source (B) and the transformer (T) preferably being configured as an autotransformer having a single continuous winding with a central tap and taps symmetrical thereto, characterized in that at least one serial connection of two electronic switches ($Q_1$, $Q_2$; $Q_{1a}$, $Q_{1b}$, $Q_{1c}$, $Q_{2a}$, $Q_{2b}$, $Q_{2c}$) bridged by recovery diodes is connected between the point of connection of the connections facing away from the transformer (T), of the secondary electronic switches ($Q_5$, $Q_6$) and the pole facing away from the transformer (T), of the d.c. voltage source (B), the recovery diodes of which electronic switches are located in opposite senses relative to the recovery diodes of the two secondary electronic switches ($Q_5$, $Q_6$), wherein the load (M) is connected parallel to one of the electronic switches connected in series, or that the load (M) is connected between the point of connection of the connections facing away from the transformer (T), of the secondary electronic switches ($Q_5$, $Q_6$) and the pole facing away from the transformer (T), of the d.c. voltage source (B), and that an electronic switch bridged by a recovery diode is arranged in series with the d.c. voltage source (B), the recovery diode of which electronic switch is located in an opposite sense relative to the recovery diodes of the two secondary electronic switches ($Q_5$, $Q_6$), or a half bridge in the form of a serial connection of two electronic switches bridged by recovery diodes ($Q_1$, $Q_2$) is connected to the d.c. voltage source (B), the center of which half bridge is connected with the load (M) on the side facing away from the transformer (T).

2. A control circuit according to claim 1, characterized in that the load (M) is comprised of a d.c. commutator motor including a permanent magnet stator and an air-core rotor whose armature inductance serves as a storage choke.

3. A control circuit according to claim 2, characterized in that the rotor is designed as an air-core disc armature.

4. A control circuit according to claim 1, characterized in that the load (M) is comprised of a socalled commutator-free d.c. motor including a shaft encoder, a permanent magnet rotor and several stator phase windings, wherein the number of serial connections of two electronic switches ($Q_{1a}$, $Q_{1b}$, $Q_{1c}$, $Q_{2a}$, $Q_{2b}$, $Q_{2c}$) each bridged by recovery diodes and connected between the point of connection of the connections facing away from the transformer, of the secondary electronic switches ($Q_5$, $Q_6$) and the pole facing away from the transformer (T), of the d.c. voltage source (B) corresponds to the number of stator phase windings.

5. A control circuit according to any one of claims 1 to 4, characterized in that, in a motor (M) for both directions of rotation, the motor, or each motor winding, is located in the diagonal of a bridge circuit comprised of electronic switches ($Q_{1a}$, $Q_{1b}$; $Q_{2a}$, $Q_{2b}$) bridged by recovery diodes, all of said bridge circuits being connected between the point of connection of the connections facing away from the transformer (T), of the secondary electronic switches ($Q_5$, $Q_6$) and the pole facing away from the transformer (T), of the d.c. voltage source (B).

## Revendications

1. Circuit électronique de commande pour l'alimentation de charges (M) ohmiques et inductives par des impulsions de courant continu à taux cyclique variable, en particulier des moteurs électriques, de préférence des moteurs dans le stator ou le rotor desquels un champ continu magnétique est généré, équipé d'un actionneur présentant un transformateur (T), le transformateur (T) étant raccordé côté primaire à une source de tension continue (B) par des contacteurs ($Q_3$, $Q_4$) électroniques shuntés par des diodes de roue libre dans un montage push-pull et étant en contact côté secondaire avec la charge (M) par l'intermédiaire de contacteurs ($Q_5$, $Q_6$) électroniques reliés de façon symétrique au transformateur (T) et shuntés par des diodes de roue libre, le côté secondaire du transformateur (T) étant relié ou pouvant être relié directement à la source de tension continue (B) et le transformateur (T) étant conçu de préférence comme un autotransformateur avec un bobinage continu unique avec prise médiane et des prises de réglage symétriques à celle-ci, caractérisé en ce qu'entre le point de jonction des branchements opposés au transformateur (T) des contacteurs (Q5, Q6) électroniques côté secondaire et le pôle opposé au transformateur (T) de la source de tension continue (B) est raccordé au moins un montage en série de deux contacteurs (Q1, Q2; Q1a, Q1b, Q1c, Q2a, Q2b, Q2c) électroniques shuntés par des diodes de roue libre, contacteurs dont les diodes de roue libre sont en sens inverse par rapport aux diodes de roue libre des deux contacteurs (Q5, Q6) électroniques côté secondaire, la charge (M) étant raccordée parallèlement à un contacteur électronique monté en série, ou en ce que la charge (M) est raccordée entre le point de jonction des branchements opposés au transformateur (T) des contacteurs (Q5, Q6) électroniques côté secondaire et le pôle opposé au transformateur (T) de la source de tension continue (B) et en ce qu'il est prévu, en série avec la source de tension continue (B), un contacteur électronique shunté par une diode de roue libre, dont la diode de roue libre est en sens inverse par rapport aux diodes de roue libre des deux contacteurs (Q5, Q6) électroniques côté secondaire, ou qu'on raccorde à la source de tension continue (B) un demi-pont sous la forme d'un montage en série de deux contacteurs (Q1, Q2) shuntés par des diodes de roue libre dont le point central est relié à la charge (M) du côté opposé au transformateur (T).

2. Circuit de commande selon la revendication 1, caractérisé en ce que la charge (M) est formée par un moteur à collecteur à courant continu avec stator à aimant permanent et rotor sans fer dont l'inductance dans l'induit sert de bobine d'inductance à accumulation.

3. Circuit de commande selon la revendication 2, caractérisé en ce que le rotor est conçu comme un entrefer plat à noyau sans fer.

4. Circuit de commande selon la revendication 1, caractérisé en ce que la charge (M) est formée d'un moteur à courant continu sans collecteur équipé d'un encodeur, d'un rotor à aimant permanent et de plusieurs enroulements statoriques à phases, le nombre des montages en série, raccordés entre le point de liaison des branchements opposés au transformateur des contacteurs (Q5, Q6) électroniques côté secondaire et le pôle opposé au transformateur (T) de la source de tension continue (B) correspondant, de respectivement deux contacteurs (Q1a, Q1b; Q1c, Q2a, Q2b, Q2c) électroniques shuntés par des diodes de roue libre correspondant au nombre des enroulements statoriques à phases.

5. Circuit de commande selon l'une quelconque des revendications 1 à 4, caractérisé en ce que, sur un moteur (M) et pour les deux sens de rotation, le moteur et chaque enroulement de moteur se trouvent dans la diagonale d'un montage en pont constitué de contacteurs (Q1a, Q1b; Q2a, Q2b) électroniques shuntés par des diodes de roue libre, tous les montages en pont étant raccordés entre le point de jonction des branchements opposés au transformateur (T) des contacteurs (Q5, Q6) électroniques côté secondaire et le pôle opposé au transformateur (T) de la source de tension continue (B).

**FIG. 1**

**FIG. 2**

FIG. 3

FIG. 4

FIG. 5

FIG. 6

FIG. 7

FIG. 8

FIG. 9

FIG. 10

FIG. 11

PHASE 1 ————
PHASE 2 ————

FIG. 12

FIG. 13

FIG. 14

FIG. 15

FIG. 16

FIG. 17

FIG. 18

FIG. 19